# EUROPEAN PATENT APPLICATION

(11) **EP 3 796 634 A1**
(43) Date of publication of application: **24.03.2021**
(21) Application number: 19815232.4
(22) Date of filing: 08.01.2019
(51) Int. Cl.: H04N 5/225, H04N 5/33, G06K 9/00

(54) **IMAGE ACQUISITION METHOD AND DEVICE, IMAGE CAPTURE DEVICE, COMPUTER APPARATUS, AND READABLE STORAGE MEDIUM**

(30) Priority: 06.06.2018 CN 201810574253
(71) Applicant: GUANGDONG OPPO MOBILE TELECOMMUNICATIONS CORP., LTD., Dongguan Guangdong 523860 (CN)
(72) Inventor: ZHANG, Xueyong, Dongguan, Guangdong 523860 (CN)
(74) Representative: Manitz Finsterwald Patent- und Rechtsanwaltspartnerschaft mbB
(86) International application number: PCT/CN2019/070853
(87) International publication number: WO 2019/233106

(57) **Abstract**

An image acquisition method, an image capture device (100), a non-volatile computer readable storage medium (200), and a computer apparatus (1000). The image acquisition method comprises: (011) acquiring a depth image of a current scene; (012) acquiring a visible light image of the current scene; (013) acquiring a current depth of a target object in a target scene according to the depth image and the visible light image; (014) acquiring, at the current depth, a current degree of coincidence representing a percentage of a field of view of the entire visible light image accounted for by a region at which a field of view of the depth image overlaps with a field of view of the visible light image; (015) determining whether the current degree of coincidence is within a preset range; and (016) if the current degree of coincidence exceeds the preset range, issuing indication information for adjusting a depth of the target object.

## Description

### CROSS-REFERENCE TO RELATED APPLICATIONS

This application claims a priority and benefit to Chinese Patent Application No. 201810574253.8, filed in National Intellectual Property Administration of China on June 06, 2018, the content of which is herein incorporated by reference in its entirety.

### TECHNICAL FIELD

The present disclosure generally relates to the technical field of image-processing, and in particular to an image-acquisition method and device, an image-capturing device, a non-transitory computer readable storage medium, and a computing device.

### BACKGROUND

Currently, an image acquisition device for generating three-dimensional images generally includes a visible-light camera and an infrared-light camera. The visible-light camera is used to obtain a visible-light image, the infrared-light camera is used to obtain a depth image, and then the visible-light image and the depth image are synthesized to obtain a three-dimensional image.

### SUMMARY OF THE DISCLOSURE

Embodiments of the present disclosure provide an image-acquisition method and device, an image-capturing device, a non-transitory computer readable storage medium, and a computing device.

An image-acquisition method includes:
obtaining a depth image of a current scene;
obtaining a visible-light image of the current scene;
obtaining a current depth of a target object in a target scene according to the depth image and the visible-light image;
obtaining a current overlapping degree of an overlapping region between a field-of-view (FOV) region of the depth image at the current depth and a FOV region of the visible-light image at the current depth, to the FOV region of the visible-light image at the current depth;
determining whether the current overlapping degree is within a preset range; and
triggering a prompt message for adjusting the current depth of the target object, in response to the current overlapping degree not being within the preset range.

An image-acquisition device includes a first obtaining module, a second obtaining module, a third obtaining module, a fourth obtaining module, a determining module, and a prompt module. The first obtaining module is configured for obtaining a depth image of a current scene. The second obtaining module is configured for obtaining a visible-light image of the current scene. The third obtaining module is configured for obtaining a current depth of a target object in a target scene according to the depth image and the visible-light image. The fourth obtaining module is configured for obtaining a current overlapping degree of an overlapping region between a field-of-view (FOV) region of the depth image at the current depth and a FOV region of the visible-light image at the current depth, to the FOV region of the visible-light image at the current depth. The determining module is configured for determining whether the current overlapping degree is within a preset range. The prompt module, configured for triggering a prompt message for adjusting the current depth of the target object, in response to the current overlapping degree not being within the preset range.

An image-capturing device includes a depth-capturing assembly, a visible-light camera, and a processor. The depth-capturing assembly is configured for obtaining a depth image of a current scene. The visible-light camera is configured for obtaining a visible-light image of the current scene. The processor is configured for: obtaining a current depth of a target object in a target scene according to the depth image and the visible-light image; obtaining a current overlapping degree of an overlapping region between a field-of-view (FOV) region of the depth image at the current depth and a FOV region of the visible-light image at the current depth, to the FOV region of the visible-light image at the current depth; determining whether the current overlapping degree is within a preset range; and triggering a prompt message for adjusting the current depth of the target object, in response to the current overlapping degree not being within the preset range.

One or more non-transitory computer-readable storage medium containing computer-executable instructions, when executed by one or more processor, causing the one or more processor to perform: obtaining a depth image of a current scene; obtaining a visible-light image of the current scene; obtaining a current depth of a target object in a target scene according to the depth image and the visible-light image; obtaining a current overlapping degree of an overlapping region between a field-of-view (FOV) region of the depth image at the current depth and a FOV region of the visible-light image at the current depth, to the FOV region of the visible-light image at the current depth; determining whether the current overlapping degree is within a preset range; and triggering a prompt message for adjusting the current depth of the target object, in response to the current overlapping degree not being within the preset range.

A computing device includes a processor and a memory storing computer-executable instructions, when executed by the processor, causing the processor to perform: obtaining a depth image of a current scene; obtaining a visible-light image of the current scene; obtaining a current depth of a target object in a target scene according to the depth image and the visible-light image; obtaining a current overlapping degree of an overlapping region between a field-of-view (FOV) region of the depth image at the current depth and a FOV region of the visible-light image at the current depth, to the FOV region of the visible-light image at the current depth; determining whether the current overlapping degree is within a preset range; and triggering a prompt message for adjusting the current depth of the target object, in response to the current overlapping degree not being within the preset range.

The additional aspects and advantages of the embodiments of the present disclosure will be partly given in the following description, and part of them will become obvious from the following description, or be understood through the practice of the embodiments of the present disclosure.

### BRIEF DESCRIPTION OF THE DRAWINGS

The above and/or additional aspects and advantages of the present disclosure will become apparent and readily understood from the following description in accordance with drawings.
FIG. 1 is a schematic flowchart of an image-acquisition method according to some embodiments of the present disclosure.
FIG. 2 is a schematic diagram of an image-acquisition device according to some embodiments of the present disclosure.
FIG. 3 is a schematic diagram of an image-capturing device according to some embodiments of the present disclosure.
FIG. 4 is a schematic diagram of the principle of an image-capturing device according to some embodiments of the present disclosure.
FIG. 5 is a schematic diagram of a computing device according to some embodiments of the present disclosure.
FIG. 6 is a schematic flowchart of an image-acquisition method according to some embodiments of the present disclosure.
FIG. 7 is a schematic diagram of modules of an image-acquisition device according to some embodiments of the present disclosure.
FIG. 8 is a schematic diagram of the principle of an image-acquisition method according to some embodiments of the present disclosure.
FIG. 9 is a schematic diagram of a computer-readable storage medium and a processor according to some embodiments of the present disclosure.
FIG. 10 is a schematic diagram of a computing device according to some embodiments of the present disclosure.

### DETAILED DESCRIPTION

The embodiments of the present disclosure will be described in detail below in conjunction with the drawings. Same or similar reference numerals may be used to indicate same or similar elements or elements having same or similar functions. Further, the embodiments described below with reference to the drawings are illustrative and intended to describe the present disclosure, and are not intended to be construed as limiting of the present disclosure.

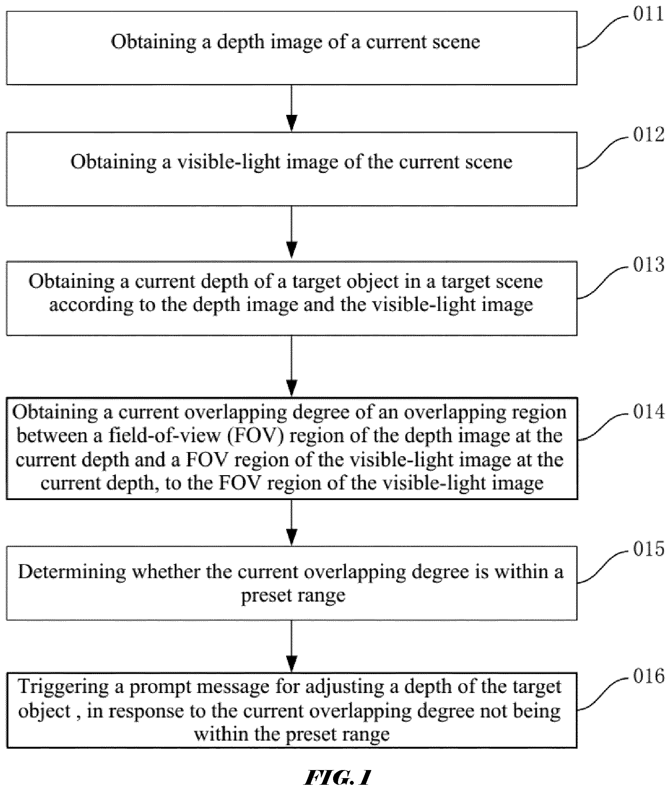

As shown in FIG. 1, an image-acquisition method according to embodiments of the present disclosure includes actions/operations in the following.

At 011, the method obtains a depth image of a current scene.

At 012, the method obtains a visible-light image of the current scene.

At 013, the method obtains a current depth of a target object in a target scene according to the depth image and the visible-light image.

At 014, the method obtains a current overlapping degree of an overlapping region between a field-of-view (FOV) region of the depth image at the current depth and a FOV region of the visible-light image at the current depth, to the FOV region of the visible-light image at the current depth.

At 015, the method determines whether the current overlapping degree is within a preset range.

At 016, the method triggers a prompt message for adjusting the current depth of the target object, in response to the current overlapping degree not being within the preset range.

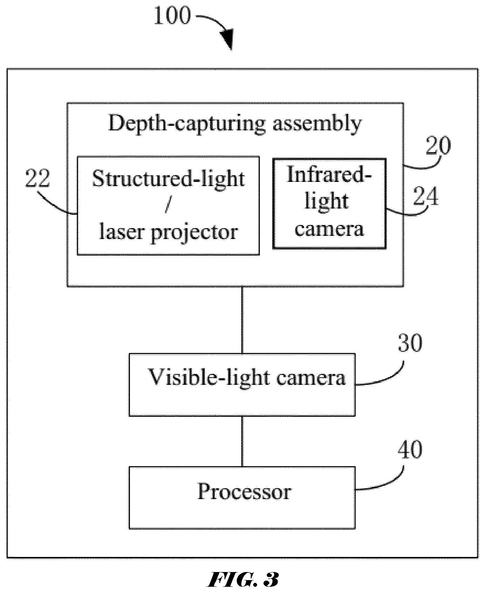

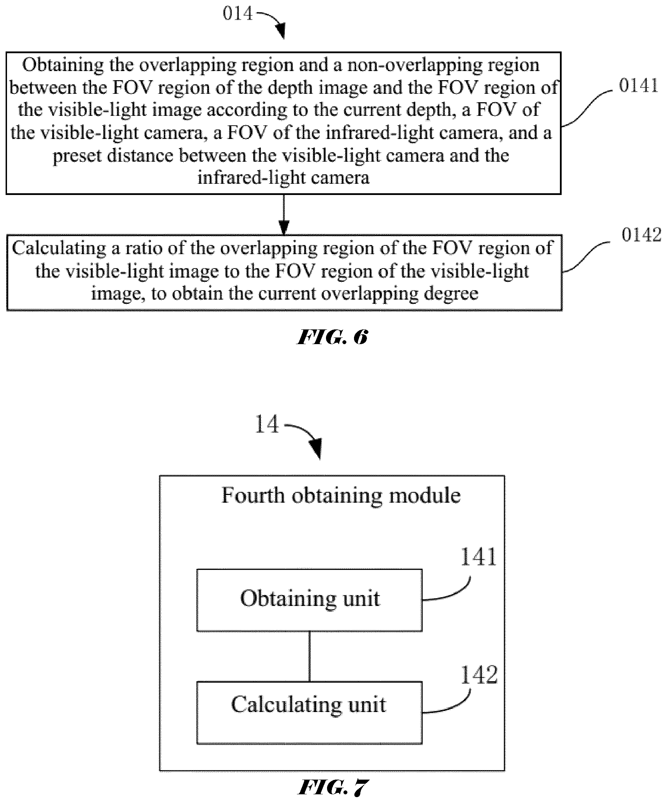

As shown in FIG. 3 and FIG. 6, in some embodiments, the image-acquisition method is applied to an image-capturing device 100. The image-capturing device 100 includes a visible-light camera 30 and an infrared-light camera 24. Block 014 includes actions/operations in the following.

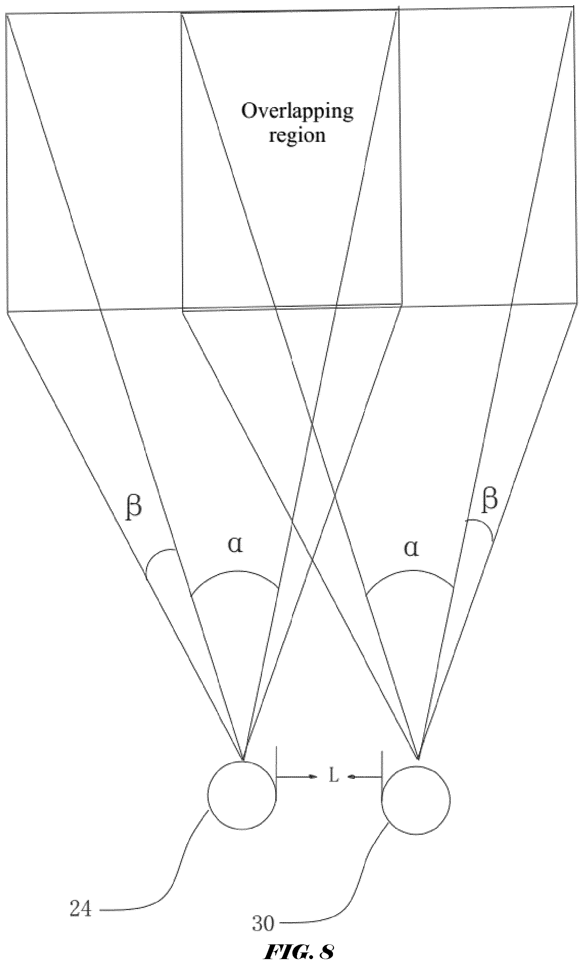

At 0141, the method obtains the overlapping region and a non-overlapping region between the FOV region of the depth image at the current depth and the FOV region of the visible-light image at the current depth according to the current depth, a FOV of the visible-light camera 30, a FOV of the infrared-light camera 24, and a preset distance 'L' between the visible-light camera 30 and the infrared-light camera 24 (as shown in FIG. 8).

At 0142, the method calculates a ratio of the overlapping region to the FOV region of the visible-light image, to obtain the current overlapping degree.

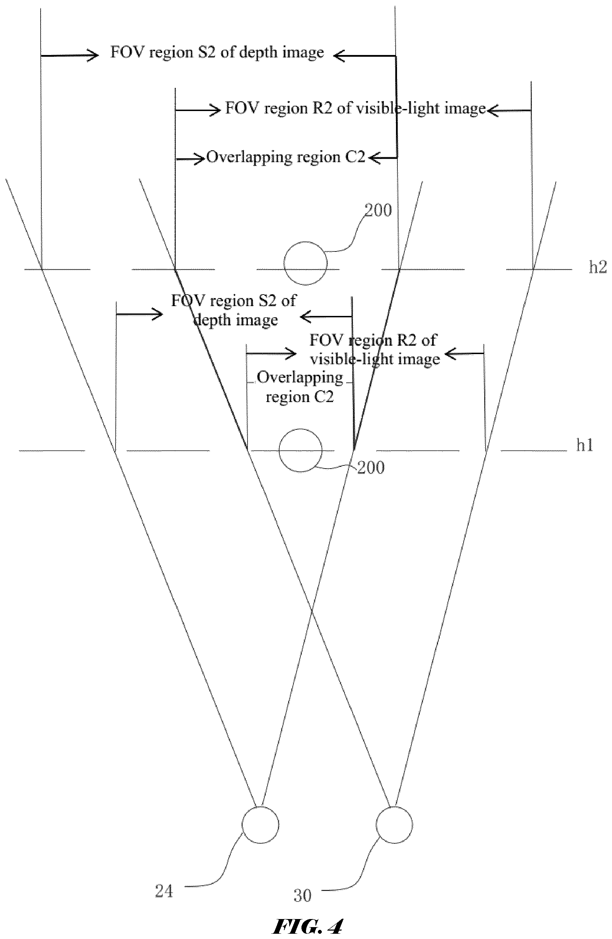

As shown in FIG. 4, in some embodiments, when the preset distance is invariant, the current overlapping degree increases as the current depth of the target object increases; or/and when the current depth is invariant, the current overlapping degree decreases as the preset distance increases.

In some embodiments, the method further includes: triggering a prompt message for increasing the current depth of the target object in response to the current overlapping degree being less than the minimum value of the preset range, and/or triggering a prompt message for decreasing the current depth of the target object in response to the current overlapping degree being greater than the maximum value of the preset range.

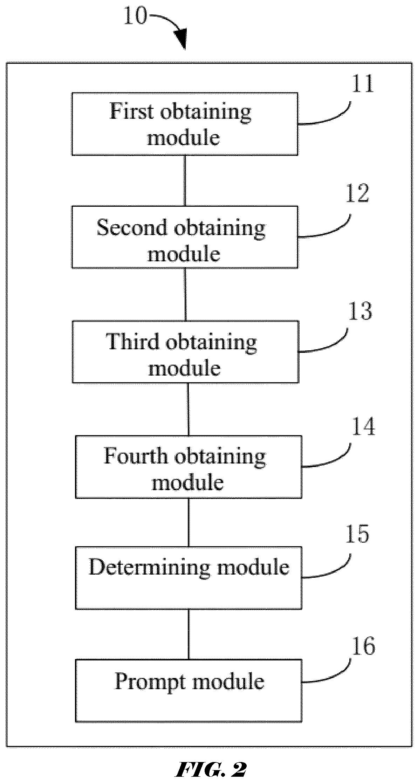

As shown in FIG. 2, the image-acquisition device 10 of embodiments of the present disclosure includes a first obtaining module 11, a second obtaining module 12, a third obtaining module 13, a fourth obtaining module 14, a determining module 15, and a prompt module 16. The first obtaining module 11 is used to obtain a depth image of a current scene. The second obtaining module 12 is used to obtain a visible-light image of the current scene. The third obtaining module 13 is configured to a current depth of a target object in a target scene according to the depth image and the visible-light image. The fourth obtaining module 14 is configured to obtain a current overlapping degree of an overlapping region between a field-of-view (FOV) region of the depth image at the current depth and a FOV region of the visible-light image at the current depth, to the FOV region of the visible-light image at the current depth. The determining module 15 is used to determine whether the current overlapping degree is within a preset range. The prompt module 16 is used to trigger a prompt message for adjusting the current depth of the target object, in response to the current overlapping degree not being within the preset range.

As shown in FIG. 3 and FIG. 7, in some embodiments, the image-acquisition device 10 is applied in the image-capturing device 100. The image-capturing device 100 includes a visible-light camera 30 and an infrared-light camera 24. The fourth obtaining module 14 includes an obtaining unit 141 and a calculating unit 142. The obtaining unit 141 is used to obtain the overlapping region and a non-overlapping region between the FOV region of the depth image at the current depth and the FOV region of the visible-light image at the current depth according to the current depth, a FOV of the visible-light camera 30, a FOV of the infrared-light camera 24, and a preset distance 'L' between the visible-light camera 30 and the infrared-light camera 24. The calculating unit 142 is used to calculate a ratio of the overlapping region to the FOV region of the visible-light image, to obtain the current overlapping degree.

As shown in FIG. 4, in some embodiments, when the preset distance is invariant, the current overlapping degree increases as the current depth of the target object increases; or/and when the current depth is invariant, the current overlapping degree decreases as the preset distance increases.

As shown in FIG. 2, in some embodiments, the prompt module 16 is further used for triggering a prompt message for increasing the current depth of the target object, in response to the current overlapping degree being less than a minimum value of the preset range, and/or triggering a prompt message for decreasing the current depth of the target object, in response to the current overlapping degree being greater than a maximum value of the preset range.

As shown in FIG. 3, the image-capturing device 100 of embodiments of the present disclosure includes a depth-capturing assembly 20, a visible-light camera 30, and a processor 40. The depth-capturing assembly 20 is used to obtain a depth image of a current scene. The visible-light camera 30 is used to obtain a visible-light image of the current scene. The processor 40 is configured to obtain a current depth of a target object in a target scene according to the depth image and the visible-light image, obtain a current overlapping degree of an overlapping region between a field-of-view (FOV) region of the depth image at the current depth and a FOV region of the visible-light image at the current depth, to the FOV region of the visible-light image at the current depth, determine whether the current overlapping degree is within a preset range, and trigger a prompt message for adjusting the current depth of the target object, in response to the current overlapping degree not being the preset range.

As shown in FIG. 3, in some embodiments, the depth-capturing assembly 20 includes an infrared-light camera 24. The processor 40 may be used to further obtain the overlapping region and a non-overlapping region between the FOV region of the depth image at the current depth and the FOV region of the visible-light image at the current depth according to the current depth, a FOV of the visible-light camera 30, a FOV of the infrared-light camera 24, and a preset distance 'L' between the visible-light camera 30 and the infrared-light camera 24, and calculate a ratio of the overlapping region to the FOV region of the visible-light image to obtain the current overlapping degree.

As shown in FIG. 4, in some embodiments, when the preset distance is invariant, the current overlapping degree increases as the current depth of the target object increases; or/and when the current depth is invariant, the current overlapping degree decreases as the preset distance increases.

As shown in FIG. 3, in some embodiments, the processor 40 is further configured to trigger a prompt message for increasing the current depth of the target object, in response to the current overlapping degree being less than a minimum value of the preset range, and/or trigger a prompt message for decreasing the current depth of the target object, in response to the current overlapping degree being greater than a maximum value of the preset range.

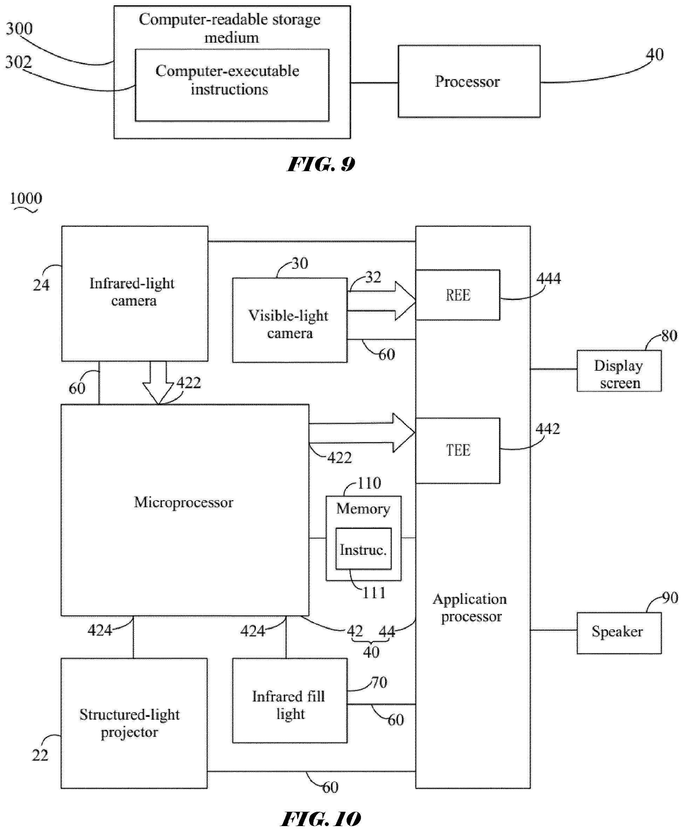

As shown in FIG. 1 and FIG. 9, one or more non-transitory computer-readable storage medium 300 according to the embodiments of the present disclosure contains computer-executable instructions 302. When the computer-executable instructions 302 are executed by one or more processor 40, the processor 40 is caused to perform the following actions/operations.

At 011, obtaining a depth image of a current scene.

At 012, obtaining a visible-light image of the current scene.

At 013, obtaining a current depth of a target object in a target scene according to the depth image and the visible-light image.

At 014, obtaining a current overlapping degree of an overlapping region between a field-of-view (FOV) region of the depth image at the current depth and a FOV region of the visible-light image at the current depth, to the FOV region of the visible-light image.

At 015, determining whether the current overlapping degree is within a preset range.

At 016, triggering a prompt message for adjusting the current depth of the target object, in response to the current overlapping degree not being within the preset range.

As shown in FIG. 3 and FIG. 9, in some embodiments, the computer-readable storage medium 300 is applied in an image-capturing device 100. The image-capturing device 100 includes a visible-light camera 30 and an infrared-light camera 24. When the computer-executable instructions 302 are executed by one or more processor 40, the processor 40 is caused to further perform the following actions/operations.

At 0141, obtaining the overlapping region and a non-overlapping region between the FOV region of the depth image at the current depth and the FOV region of the visible-light image at the current depth according to the current depth, a FOV of the visible-light camera 30, a FOV of the infrared-light camera 24, and a preset distance 'L' between the visible-light camera 30 and the infrared-light camera 24 (as shown in FIG. 8).

At 0142, calculating a ratio of the overlapping region to the FOV region of the visible-light image, to obtain the current overlapping degree.

As shown in FIG. 4, in some embodiments, when the preset distance is invariant, the current overlapping degree increases as the current depth of the target object increases; or/and when the current depth is invariant, the current overlapping degree decreases as the preset distance increases.

As shown in FIG. 9, in some embodiments, when the computer-executable instructions 302 are executed by one or more processor 40, the processor 40 is caused to further perform triggering a prompt message for increasing the current depth of the target object, in response to the current overlapping degree being less than a minimum value of the preset range, and/or triggering a prompt message for decreasing the current depth of the target object, in response to the current overlapping degree being greater than a maximum value of the preset range.

As shown in FIG. 10, the computing device 1000 of embodiments of the present disclosure includes a memory 110 and a processor 40. The memory 110 stores computer-readable instructions 111. When the computer-readable instructions 111 are executed by the processor 40, the processor 40 executes the following actions/operations.

At 011, obtaining a depth image of a current scene.

At 012, obtaining a visible-light image of the current scene.

At 013, obtaining a current depth of a target object in a target scene according to the depth image and the visible-light image.

At 014, obtaining a current overlapping degree of an overlapping region between a field-of-view (FOV) region of the depth image at the current depth and a FOV region of the visible-light image at the current depth, to the FOV region of the visible-light image.

At 015, determining whether the current overlapping degree is within a preset range.

At 016, triggering a prompt message for adjusting the current depth of the target object, in response to the current overlapping degree not being within the preset range.

As shown in FIG. 10, in some embodiments, the computing device 1000 includes a visible-light camera 30 and an infrared-light camera 24. When the computer-executable instructions 111 are executed by the processor 40, the processor 40 is caused to further perform the following actions/operations.

At 0141, obtaining the overlapping region and a non-overlapping region between the FOV region of the depth image at the current depth and the FOV region of the visible-light image at the current depth according to the current depth, a FOV of the visible-light camera 30, a FOV of the infrared-light camera 24, and a preset distance 'L' between the visible-light camera 30 and the infrared-light camera 24 (as shown in FIG. 8).

At 0142, calculating a ratio of the overlapping region to the FOV region of the visible-light image, to obtain the current overlapping degree.

As shown in FIG. 4, in some embodiments, when the preset distance is invariant, the current overlapping degree increases as the current depth of the target object increases; or/and when the current depth is invariant, the current overlapping degree decreases as the preset distance increases.

As shown in FIG. 10, in some embodiments, when the computer-executable instructions 111 are executed by the processor 40, the processor 40 is caused to further perform triggering a prompt message for increasing the current depth of the target object, in response to the current overlapping degree being less than a minimum value of the preset range, and/or triggering a prompt message for decreasing the current depth of the target object, in response to the current overlapping degree being greater than a maximum value of the preset range.

As shown in FIG. 1, an image-acquisition method is provided, which includes actions/operations in the following.

At 011, the method obtains a depth image of a current scene.

At 012, the method obtains a visible-light image of the current scene.

At 013, the method obtains a current depth of a target object in a target scene according to the depth image and the visible-light image.

At 014, the method obtains a current overlapping degree of an overlapping region between a field-of-view (FOV) region of the depth image at the current depth and a FOV region of the visible-light image at the current depth, to the FOV region of the visible-light image at the current depth.

At 015, the method determines whether the current overlapping degree is within a preset range.

At 016, the method triggers a prompt message for adjusting the current depth of the target object, in response to the current overlapping degree not being within the preset range.

As shown in FIG. 2, an image-acquisition device 10 is provided. The image-acquisition device 10 includes a first obtaining module 11, a second obtaining module 12, a third obtaining module 13, a fourth obtaining module 14, a determining module 15, and a prompt module 16. The first obtaining module 11 is used to obtain a depth image of a current scene. The second obtaining module 12 is used to obtain a visible-light image of the current scene. The third obtaining module 13 is configured to a current depth of a target object in a target scene according to the depth image and the visible-light image. The fourth obtaining module 14 is configured to obtain a current overlapping degree of an overlapping region between a field-of-view (FOV) region of the depth image at the current depth and a FOV region of the visible-light image at the current depth, to the FOV region of the visible-light image. The determining module 15 is used to determine whether the current overlapping degree is within a preset range. The prompt module 16 is used to trigger a prompt message for adjusting the current depth of the target object, in response to the current overlapping degree not being within the preset range.

As shown in FIG. 3, the image-capturing device 100 is provided. The image-capturing device 100 includes a depth-capturing assembly 20, a visible-light camera 30, and a processor 40. The depth-capturing assembly 20 is used to obtain a depth image of a current scene. The visible-light camera 30 is used to obtain a visible-light image of the current scene. The processor 40 is configured to obtain a current depth of a target object in a target scene according to the depth image and the visible-light image, obtain a current overlapping degree of an overlapping region between a field-of-view (FOV) region of the depth image at the current depth and a FOV region of the visible-light image at the current depth, to the FOV region of the visible-light image, determine whether the current overlapping degree is within a preset range, and trigger a prompt message for adjusting the current depth of the target object, in response to the current overlapping degree not being the preset range. In other words, action/operation at 011 can be implemented by the depth-capturing assembly 20, action/operation at 012 can be implemented by the visible-light camera 30, and actions/operations at 013 to 016 can be implemented by the processor 40.

The image-capturing device 100 may be a front device or a rear device.

Specifically, in this embodiment, the depth-capturing assembly 20 is a structured-light camera assembly, which includes a structured-light projector 22 and an infrared-light camera 24. The structured-light projector 22 projects an infrared-light pattern into a target scene. The infrared-light camera 24 captures the modulated infrared-light pattern from the target object 200 (as shown in FIG. 4). The processor 40 calculates a depth image of the infrared-light pattern by an image matching algorithm. When the image-capturing device 100 includes the depth-capturing assembly 20, the image-capturing device 100 also includes the visible-light camera 30. The visible-light camera 30 is used to obtain a visible-light image of the target scene. The visible-light image contains color information of each object in the target scene.

Alternatively, in other embodiments, the depth-capturing assembly 20 may also be a TOF sensor module. The TOF sensor module includes a laser projector 22 and an infrared-light camera 24. The laser projector 22 projects uniform lights to a target scene. The infrared-light camera 24 receives the reflected lights and records a time point for light emission and a time point for light reception. The processor 40 calculates depth pixel values corresponding to an object in the target scene according to a difference between the time point of light emission and the time point of light reception and a speed of light, and merges the depth pixel values to obtain a depth image. When the image-capturing device 100 includes the TOF sensor module, the image-capturing device 100 also includes the visible-light camera 30. The visible-light camera 30 is used to obtain a visible-light image of the target scene. The visible-light image contains color information of each object in the target scene.

As shown in FIG. 4, the overlapping region between the FOV region of the depth image at the current depth and the FOV region of the visible-light image at the current depth is also an overlapping region between where the FOV of the infrared-light camera 24 and the FOV the visible-light camera 30 at the current depth. The non-overlapping region includes a non-overlapping part of the FOV region of the visible-light image and a non-overlapping part of the FOV region of the depth image. There is only a scene captured by the visible-light camera 30, but not a scene captured by the infrared-light camera 24 in the non-overlapping part of the FOV of the visible-light image, and there is only a scene captured by the infrared-light camera 24, but not a scene captured by the visible-light camera 30 in the non-overlapping part of the FOV region of the depth image. The current overlapping degree refers to a ratio of the overlapping region between the FOV region of the depth image at the current depth and the FOV region of the visible-light image at the current depth to the entire FOV region of the visible-light image at the current depth. For example, at the depth h1, the current overlapping degree W1 is a ratio of the overlapping area C1 between the FOV region S1 of the depth image and the FOV region R1 of the visible-light image to the FOV region R1 of the visible-light image, i.e. W1=C1/R1. At the depth h2, the current overlapping degree W2 is a ratio of the overlapping region C2 between the FOV region S2 of the depth image and the FOV region R2 of the visible-light image to the FOV region R2 of the visible-light image, that is, W2=C2/R2

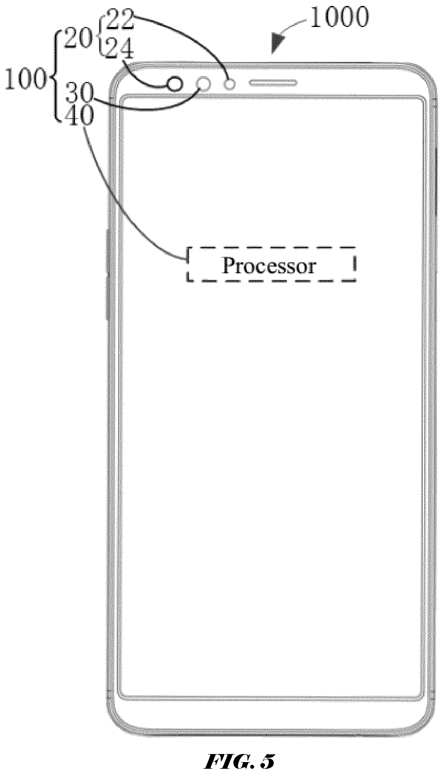

As shown in FIG. 5, the image-capturing device 100 of embodiments of the present disclosure can be applied in the computing device 1000 of embodiments of the present disclosure. That is, the computing device 1000 of embodiments of the present disclosure may include the image-capturing device 100 of embodiments of the present disclosure. The image-acquisition device 10 (as shown in FIG. 2) may be provided in the computing device 1000. The computer equipment 1000 includes mobile phones, tablet computers, notebook computers, smart bracelets, smart watches, smart helmets, smart glasses, and the like. In embodiments of the present disclosure, the computing device 1000 is a mobile phone as an example for description. It can be understood that the specific form of the computing device 1000 is not limited to the mobile phone.

When the image-capturing device 100 is a front device, the image-acquisition method of the present disclosure can be applied to application scenarios of face recognition such as selfies, face unlocking, face encryption and face payment, in which a target object is the user's face. When the user uses a depth camera to capture faces, such as selfies and face recognition, as there is a certain distance between the visible-light camera 30 and the infrared-light camera 24, there is a non-overlapping part between the FOV of the visible-light camera 30 and the FOV of the infrared-light camera 24. Especially, when the user is too close to the depth camera, it will cause an overlapping region between the user's faces which is beyond the FOV of the infrared-light camera 24 and the FOV of the visible-light camera 30. Thus, entire face depth cannot be obtained. In some examples, a prompt message is triggered for increasing the current depth of the target object when the current overlapping degree is less than the minimum value of the preset range, and/or, a prompt message is triggered for decreasing the current depth of the target object when the current overlapping degree is greater than the maximum value of the preset range. At this time, the prompt module 16 is further used for triggering a prompt message for increasing the current depth of the target object in response to the current overlapping degree being less than the minimum value of the preset range, and/or triggering a prompt message for decreasing the current depth of the target object in response to the current overlapping degree being greater than the maximum value of the preset range. For example, the preset range is [80%, 90%]. Within the preset range, if a depth between the face and the depth camera (image-acquisition device 10, image-capturing device 100, or computer equipment 1000) is 40 cm, and the current overlapping degree is 85%, the mobile phone (with the depth camera) can obtain more complete and accurate depth data, indicating that a distance between the face and the mobile phone (with the depth camera) is appropriate currently, the mobile phone does not need to trigger a prompt message, and the user does not need to make depth adjustments. When the current overlapping degree is less than 80%, it means that the distance between the face and the mobile phone (with the depth camera) is too close currently. For example, the depth between the face and the mobile phone (with the depth camera) is 20cm, and the current overlapping degree is 65%, which is less than the minimum value of 80% of the preset range. Then, the depth camera can only cover a part of the face, and the mobile phone (with the depth camera) can only capture a part of depth data of part of the face with the current distance. Therefore, the mobile phone sends out a prompt message to let the user increase the current distance between the user and the mobile phone. When the current overlapping degree is greater than 90%, it means that the distance between the face and the mobile phone (with the depth camera) is too large currently. For example, the depth between the face and the mobile phone (with the depth camera) is 100cm, and the current overlapping degree is 95%, which is less than 90% of the maximum value of the preset range. Then, the laser pattern projected by the depth camera has a low density. At this current distance, although the mobile phone (with the depth camera) can capture complete depth data of the face, the depth camera needs to increase the projection power to increase the density of the laser pattern, which makes the mobile phone more power-consuming. Therefore, the mobile phone sends out a prompt message to let the user decrease the current distance between the user and the mobile phone (with the depth camera). Therefore, the processor 40 is also used to trigger a prompt message for increasing the current depth of the target object in response to the current overlapping degree being less than the minimum value of the preset range, and/or trigger a prompt message for decreasing the current depth of the target object in response to the current overlapping degree being greater than the maximum value of the preset range.

In summary, in the image-acquisition method, the image-acquisition device 10, the image-capturing device 100, and the computing device 1000 of embodiments of the present disclosure, a current overlapping degree of an overlapping region between a FOV region of the visible-light image at the current depth and a FOV region of the depth image at the current depth to the FOV region of the visible-light image is determined according to the current depth of a target object, whether the current overlapping degree is within the preset range is determined, and when the current overlapping degree exceeds the preset range, a prompt message is triggered for adjusting the current depth of the target object, which is increasing the current depth of the target object or decreasing the depth of the target object. In this way, the distance between the target object and the image-capturing device 100 is appropriate. That is, the distance between the target object and the image-capturing device 100 will not be too close, so that the image-capturing device 100 can acquire complete depth data, and the distance between the target object and the image-capturing device 100 is not too large, so that the image-capturing device 100 can acquire more accurate depth data even with low power.

As shown in FIG. 6, in some embodiments, Block 014 includes actions/operations in the following.

At 0141, the method obtains the overlapping region and a non-overlapping region between the FOV region of the depth image at the current depth and the FOV region of the visible-light image at the current depth according to the current depth, a FOV of the visible-light camera 30, a FOV of the infrared-light camera 24, and a preset distance 'L' between the visible-light camera 30 and the infrared-light camera 24 (as shown in FIG. 8).

At 0142, the method calculates a ratio of the overlapping region to the FOV region of the visible-light image, to obtain the current overlapping degree.

As shown in FIG. 7 together, in some embodiments, the fourth obtaining module 14 includes an obtaining unit 141 and a calculating unit 142. The obtaining unit 141 is used to obtain the overlapping region and a non-overlapping region between the FOV region of the depth image at the current depth and the FOV region of the visible-light image at the current depth according to the current depth, a FOV of the visible-light camera 30, a FOV of the infrared-light camera 24, and a preset distance 'L' between the visible-light camera 30 and the infrared-light camera 24. The calculating unit 142 is used to calculate a ratio of the overlapping region to the FOV region of the visible-light image, to obtain the current overlapping degree.

As shown in FIG. 5, the processor 40 may also be used to obtain the overlapping region and a non-overlapping region between the FOV region of the depth image at the current depth and the FOV region of the visible-light image at the current depth according to the current depth, a FOV of the visible-light camera 30, a FOV of the infrared-light camera 24, and a preset distance 'L' between the visible-light camera 30 and the infrared-light camera 24, and calculate a ratio of the overlapping region to the FOV region of the visible-light image, to obtain the current overlapping degree. In other words, actions/operations at 0141 to 0142 can be implemented by the processor 40.

As shown in FIG. 8, specifically, the view angle includes a horizontal view angle α and a vertical view angle β, and the horizontal view angle α and the vertical view angle β are for determining the FOV In embodiments of the present disclosure, the infrared-light camera 24 and the visible-light camera 30 have the same vertical view angle β but different horizontal view angle α. It is similar in a case where the horizontal view angles α of the infrared-light camera 24 and the visible-light camera 30 are the same and the vertical view angles β are different and a case where the horizontal view angles and the vertical view angles β of the infrared-light camera 24 and the visible-light camera 30 are different, which will not repeated herein.

Combined with FIG. 5, when the image-capturing device 100 or the computing device 1000 is shipped from the factory, the FOV of the visible-light camera 30, the FOV of the infrared-light camera 24, and a preset distance 'L' between the visible-light camera 30 and the infrared-light camera 24 L have been determined. Sizes of the overlapping region and non-overlapping region between the FOV region of the depth image and the FOV region of the visible-light image are in a corresponding relation to the current depth of the target object, a FOV of the visible-light camera 30, a FOV of the infrared-light camera 24, and a preset distance 'L' between the visible-light camera 30 and the infrared-light camera 24. For example, when the current depth is invariant, and the FOV of the visible-light camera 30 and the FOV the infrared-light camera 24 are invariant, the overlapping region between the FOV region of the depth image and the FOV region of the visible-light image is decreased gradually and the non-overlapping region between the FOV region of the depth image and the FOV region of the visible-light image is increased gradually as the preset distance 'L' between the visible-light camera 30 and the infrared-light camera 24 become larger. For another example, when the current depth is invariant, the FOV of the visible-light camera 30 is invariant, and the preset distance 'L' between the visible-light camera 30 and the infrared-light camera 24 is invariant, the overlapping region between the FOV region of the depth image and the FOV region of the visible-light image is increased gradually and the non-overlapping region between the FOV region of the depth image and the FOV region of the visible-light image is decreased gradually as the FOV the infrared-light camera 24 become larger. For yet another example, when the current depth is invariant, the FOV the infrared-light camera 24 is invariant, and the preset distance 'L' between the visible-light camera 30 and the infrared-light camera 24 is invariant, the overlapping region between the FOV region of the depth image and the FOV region of the visible-light image is increased gradually and the non-overlapping region between the FOV region of the depth image and the FOV region of the visible-light image is decreased gradually as the FOV of the visible-light camera 30 become larger.

In this way, the overlapping region between the FOV region of the depth image and the FOV region of the visible-light image, the non-overlapping part of the visible-light image, and the non-overlapping part of the depth image can be determined according to the current depth of the target object 200 and preset parameters of the visible-light camera 30 and the infrared-light camera 24 shipped from the factory. The algorithm is simple, and then sizes of the overlapping region and a non-overlapping region between the FOV region of the depth image and the FOV region of the visible-light image can be determined more quickly. Then, the current overlapping degree can be calculated according to the above.

As shown in FIG. 4, in some embodiments, when the preset distance between the visible-light camera 30 and the infrared-light camera 24 is invariant, the current overlapping degree increases as the current depth of the target object of the target object 200 increases; or/and when the current depth of the target object 200 is invariant, the current overlapping degree decreases as the preset distance between the visible-light camera 30 and the infrared-light camera 24 increases. For example, the current overlapping degree at depth h1 is less than the current overlapping degree at depth h2.

In some embodiments, the preset range can be customized.

Specifically, as shown in FIG. 3, when a user acquires a three-dimensional image through the image-capturing device 100 (for example, photographing a building, etc.), the user can manually set the preset range to 100% in order to obtain a three-dimensional image with a larger FOV region. At this time, the FOV of the infrared-light camera 24 can completely cover the FOV of the visible-light camera 30, and all regions of the visible-light image can obtain depth information. Thus, the synthesized three-dimensional image contains the scene of the entire visible-light image. While in face recognition, since the face only occupies a small part of the shooting scene, there is no need to set the preset range to 100%, but set to [80%, 90%], and then the entire face is captured in the synthesized three-dimensional image. In this way, the user can customize the preset range to meet different shooting needs of the user.

As shown in FIG. 9, embodiments of the present disclosure also provide a computer-readable storage medium 300, and the computer-readable storage medium 300 can be applied in the image-capturing device 100. One or more non-transitory computer-readable storage medium 300 contains computer-executable instructions 302. When the computer-executable instructions 302 are executed by one or more processor 40, the processor 40 is caused to perform the image-acquisition method in foregoing embodiments, such as obtaining a depth image of a current scene at 011, obtaining a visible-light image of the current scene at 012, obtaining a current depth of a target object in a target scene according to the depth image and the visible-light image at 013, obtaining a current overlapping degree of an overlapping region between a field-of-view (FOV) region of the depth image at the current depth and a FOV region of the visible-light image at the current depth, to the FOV region of the visible-light image at 014, determining whether the current overlapping degree is within a preset range at 015, and triggering a prompt message for adjusting the current depth of the target object, in response to the current overlapping degree not being within the preset range at 016.

In the computer-readable storage medium 300 of embodiments of the present disclosure, a current overlapping degree of an overlapping region between a FOV region of the visible-light image at the current depth and a FOV region of the depth image at the current depth to the FOV region of the visible-light image is determined according to the current depth of a target object, whether the current overlapping degree is within the preset range is determined, and when the current overlapping degree exceeds the preset range, a prompt message is triggered for adjusting the current depth of the target object, which is increasing the current depth of the target object or decreasing the current depth of the target object. In this way, the distance between the target object and the image-capturing device 100 is appropriate. That is, the distance between the target object and the image-capturing device 100 will not be too close, so that the image-capturing device 100 can acquire complete depth data, and the distance between the target object and the image-capturing device 100 is not too large, so that the image-capturing device 100 can acquire more accurate depth data even with low power.

As shown in FIG. 10, embodiments of the present disclosure provide a computing device 1000. The computing device 1000 includes a structured-light projector 22, an infrared-light camera 24, a visible-light camera 30, a processor 40, an infrared fill light 70, a display screen 80, a speaker 90, and a memory 110. The processor 40 includes a microprocessor 42 and an application processor 44.

A visible-light image of a target object can be captured by the visible-light camera 30. The visible-light camera 30 can be connected to the application processor 44 through an integrated circuit bus 60 and a mobile industry processor interface 32. The application processor 44 may be used to enable the visible-light camera 30, turn off the visible-light camera 30, or reset the visible-light camera 30. The visible-light camera 30 can be used to capture color images. The application processor 44 obtains a color image from the visible-light camera 30 through the mobile industry processor interface 32 and stores the color image in a rich execution environment 444.

An infrared-light image of a target object can be captured by the infrared-light camera 24. The infrared-light camera 24 can be connected to the application processor 44. The application processor 44 can be used to turn on the power of the infrared-light camera 24, turn off the infrared-light camera 24, or reset the infrared-light camera 24. The infrared-light camera 24 can also be connected to the microprocessor 42, and the microprocessor 42 and the infrared-light camera 24 can be connected through an Inter-Integrated Circuit (I2C) bus 60. The microprocessor 42 can provide the infrared-light camera 24 with clock information for capturing the infrared-light image, and the infrared-light image captured by the infrared-light camera 24 can be transmitted to the microprocessor 42 through a Mobile Industry Processor Interface (MIPI) 422. The infrared fill light 70 can be used to emit infrared-light, and the infrared-light is reflected by the user and received by the infrared-light camera 24. The infrared fill light 70 can be connected to the application processor 44 through the integrated circuit bus 60, and the application processor 44 can be used for enabling the infrared fill light 70. The infrared fill light 70 may also be connected to the microprocessor 42. Specifically, the infrared fill light 70 may be connected to a pulse width modulation (PWM) interface 424 of the microprocessor 42.

The structured-light projector 22 can project laser lights to a target object. The structured-light projector 22 can be connected to the application processor 44, and the application processor 44 can be used to enable the structured-light projector 22 and be connected via the integrated circuit bus 60. The structured-light projector 22 can also be connected to the microprocessor 42. Specifically, the structured-light projector 22 can be connected to the pulse width modulation interface 424 of the microprocessor 42.

The microprocessor 42 may be a processing chip, and the microprocessor 42 is connected to the application processor 44. Specifically, the application processor 44 may be used to reset the microprocessor 42, wake the microprocessor 42, and debug the microprocessor 42. The microprocessor 42 can be connected to the application processor 44 through the mobile industry processor interface 422. Specifically, the microprocessor 42 is connected to the trusted execution environment 442 of the application processor 44 through the mobile industry processor interface 422 to directly transmit data in the microprocessor 42 to the trusted execution environment 442 for storage. Codes and storage regions in the trusted execution environment 442 are controlled by an access control unit and cannot be accessed by programs in the rich execution environment (REE) 444. The trusted execution environment 442 and rich execution environment 444 may be formed in the application processor 44.

The microprocessor 42 can obtain an infrared-light image by receiving the infrared-light image captured by the infrared-light camera 24, and the microprocessor 42 can transmit the infrared-light image to the trusted execution environment 442 through the mobile industry processor interface 422. The infrared-light image output from the microprocessor 42 will not enter the rich execution environment 444 of the application processor 44, so that the infrared-light image will not be acquired by other programs, which improves information security of the computing device 1000. The infrared-light image stored in the trusted execution environment 442 can be used as an infrared-light template.

After controlling the structured-light projector 22 to project laser lights to the target object, the microprocessor 42 can also control the infrared-light camera 24 to collect a laser pattern modulated by the target object, and the microprocessor 42 obtains the laser pattern through the mobile industrial processor interface 422. The microprocessor 42 processes the laser pattern to obtain a depth image. Specifically, the microprocessor 42 may store calibration information of the laser light projected by the structured-light projector 22, and the microprocessor 42 processes the laser pattern and the calibration information to obtain depths of a target object at different locations and obtains a depth image. After the depth image is obtained, it is transmitted to the trusted execution environment 442 through the mobile industry processor interface 422. The depth image stored in the trusted execution environment 442 can be used as a depth template.

In the computing device 1000, the obtained infrared-light template and depth template are stored in the trusted execution environment 442. The verification template in the trusted execution environment 442 is not easy to be tampered and embezzled, and information in the computing device 1000 is more secure high.

In some examples, the microprocessor 42 and the application processor 44 may be two independent structures. In another some examples, the microprocessor 42 and the application processor 44 may be integrated into a single structure to form the processor 40.

The display screen 80 may be a liquid crystal display (LCD) or an organic light-emitting diode (OLED) display. When the current overlapping degree exceeds the preset range, the display screen 80 can be used to display graphic prompt information. The graphic prompt information is stored in the computing device 1000. In some examples, the prompt information is only text. For example, the text is "The user is currently too close to the computing device 1000, and please increase the distance between the computing device 1000 and the user." or "The user is currently too far away from the computing device 1000, and please reduce the distance between the computing device 1000 and the user." In another some examples, the display screen 80 displays a box or circle corresponding to a preset range such as [80%, 90%], with the box or circle occupying 85% of the entire display screen 80, and displays the text "Please change the distance between the computing device 1000 and the user until the face remains within the box or circle."

The speaker 90 may be provided on the computing device 1000, or may be a peripheral device connected to the computing device 1000, such as a sound box. When the current overlapping degree exceeds the preset range, the speaker 90 may be used to send out voice prompt information. The voice prompt information is stored in the computing device 1000. In some examples, the voice prompt message may be "The user is currently too close to the computing device 1000, and please increase the distance between the computing device 1000 and the user." or "The user is currently too far away from the computing device 1000, and please reduce the distance between the computing device 1000 and the user." In this embodiment, the prompt information may be only graphic prompt information, only voice prompt information, or may include both graphic and voice prompt information.

The processor 40 in FIG. 10 can be used to implement the image-acquisition in any of the foregoing embodiments. For example, the processor 40 can be used to perform obtaining a depth image of a current scene at 011, obtaining a visible-light image of the current scene at 012, obtaining a current depth of a target object in a target scene according to the depth image and the visible-light image at 013, obtaining a current overlapping degree of an overlapping region between a field-of-view (FOV) region of the depth image at the current depth and a FOV region of the visible-light image at the current depth, to the FOV region of the visible-light image at 014, determining whether the current overlapping degree is within a preset range at 015, and triggering a prompt message for adjusting the current depth of the target object, in response to the current overlapping degree not being within the preset range at 016. For another some examples, the processor 40 in FIG. 10 can be used to perform the overlapping region and a non-overlapping region between the FOV region of the depth image at the current depth and the FOV region of the visible-light image at the current depth according to the current depth, a FOV of the visible-light camera 30, a FOV of the infrared-light camera 24, and a preset distance 'L' between the visible-light camera 30 and the infrared-light camera 24 at 0141, and calculating a ratio of the overlapping region to the FOV region of the visible-light image, to obtain the current overlapping degree at 0142.

The memory 110 is connected to both the microprocessor 42 and the application processor 44. The memory 110 stores computer-readable instructions 111. When the computer-readable instructions 111 are executed by the processor 40, the processor 40 executes the image-acquisition method in any one of the foregoing embodiments. Specifically, the microprocessor 42 may be used to execute an action/operation at 011, and the application processor 44 may be used to execute actions/operations at 011, 012, 013, 014, 015, 016, 0141, and 0142. Alternatively, the microprocessor 42 may be used to execute actions/operations at 011, 012, 013, 014, 015, 016, 0141, and 0142. Alternatively, the microprocessor 42 may be used to execute at least one of actions/operations at 011, 012, 013, 014, 015, 016, 0141, and 0142, and the application processor 44 may be used to execute the remaining of actions/operations at 011, 012, 013, 014, 015, 016, 0141, and 0142.

Although the embodiments of the present disclosure have been shown and described above, it can be understood that the above-mentioned embodiments are exemplary and should not be construed as limitations to the present disclosure. Those of ordinary skill in the art can comment undergo changes, modifications, substitutions and modifications on the foregoing implementations within the scope of the present disclosure. The scope of the present disclosure is defined by the claims and their equivalents.

## Claims

1. An image-acquisition method, comprising:
obtaining a depth image of a current scene;
obtaining a visible-light image of the current scene;
obtaining a current depth of a target object in a target scene according to the depth image and the visible-light image;
obtaining a current overlapping degree of an overlapping region between a field-of-view (FOV) region of the depth image at the current depth and a FOV region of the visible-light image at the current depth, to the FOV region of the visible-light image at the current depth;
determining whether the current overlapping degree is within a preset range; and
triggering a prompt message for adjusting the current depth of the target object, in response to the current overlapping degree not being within the preset range.

2. The image-acquisition method as claimed in claim 1, wherein the method is applied in an image-capturing device comprising a visible-light camera and an infrared-light camera; and
the obtaining a current overlapping degree comprises:
obtaining the overlapping region and a non-overlapping region between the FOV region of the depth image at the current depth and the FOV region of the visible-light image at the current depth according to the current depth, a FOV of the visible-light camera, a FOV of the infrared-light camera, and a preset distance between the visible-light camera and the infrared-light camera; and
calculating a ratio of the overlapping region to the FOV region of the visible-light image, to obtain the current overlapping degree.

3. The image-acquisition method as claimed in claim 2, wherein when the preset distance is invariant, the current overlapping degree increases as the current depth of the target object increases; or/and
when the current depth is invariant, the current overlapping degree decreases as the preset distance increases.

4. The image-acquisition method as claimed in claim 1, further comprising:
triggering a prompt message for increasing the current depth of the target object, in response to the current overlapping degree being less than a minimum value of the preset range; and/or
triggering a prompt message for decreasing the current depth of the target object, in response to the current overlapping degree being greater than a maximum value of the preset range.

5. An image-acquisition device, comprising:
a first obtaining module, configured for obtaining a depth image of a current scene;
a second obtaining module, configured for obtaining a visible-light image of the current scene;
a third obtaining module, configured for obtaining a current depth of a target object in a target scene according to the depth image and the visible-light image;
a fourth obtaining module, configured for obtaining a current overlapping degree of an overlapping region between a field-of-view (FOV) region of the depth image at the current depth and a FOV region of the visible-light image at the current depth, to the FOV region of the visible-light image at the current depth;
a determining module, configured for determining whether the current overlapping degree is within a preset range; and
a prompt module, configured for triggering a prompt message for adjusting the current depth of the target object, in response to the current overlapping degree not being within the preset range.

6. The image-acquisition device as claimed in claim 5, wherein the image-acquisition device is applied in an image-capturing device comprising a visible-light camera and an infrared-light camera; and
the fourth obtaining module comprises:
an obtaining unit, configured for obtaining the overlapping region and a non-overlapping region between the FOV region of the depth image at the current depth and the FOV region of the visible-light image at the current depth according to the current depth, a FOV of the visible-light camera, a FOV of the infrared-light camera, and a preset distance between the visible-light camera and the infrared-light camera; and
a calculating unit, configured for a ratio of the overlapping region to the FOV region of the visible-light image, to obtain the current overlapping degree.

7. The image-acquisition device as claimed in claim 6, wherein when the preset distance is invariant, the current overlapping degree increases as the depth of the target object increases; or/and
when the current depth is invariant, the current overlapping degree decreases as the preset distance increases.

8. The image-acquisition device as claimed in claim 5, the prompt module is further configured for triggering a prompt message for increasing the current depth of the target object, in response to the current overlapping degree being less than a minimum value of the preset range; and/or triggering a prompt message for decreasing the current depth of the target object, in response to the current overlapping degree being greater than a maximum value of the preset range.

9. An image-capturing device, comprising:
a depth-capturing assembly, configured for obtaining a depth image of a current scene;
a visible-light camera, configured for obtaining a visible-light image of the current scene;
a processor, configured for:
obtaining a current depth of a target object in a target scene according to the depth image and the visible-light image;
obtaining a current overlapping degree of an overlapping region between a field-of-view (FOV) region of the depth image at the current depth and a FOV region of the visible-light image at the current depth, to the FOV region of the visible-light image at the current depth;determining whether the current overlapping degree is within a preset range; and
triggering a prompt message for adjusting the current depth of the target object, in response to the current overlapping degree not being within the preset range.

10. The image-capturing device as claimed in claim 9, wherein the depth-capturing assembly comprises an infrared-light camera; and
the processor is further configured for:
obtaining the overlapping region and a non-overlapping region between the FOV region of the depth image at the current depth and the FOV region of the visible-light image at the current depth according to the current depth, a FOV of the visible-light camera, a FOV of the infrared-light camera, and a preset distance between the visible-light camera and the infrared-light camera; and
calculating a ratio of the overlapping region to the FOV region of the visible-light image, to obtain the current overlapping degree.

11. The image-capturing device as claimed in claim 10, wherein when the preset distance is invariant, the current overlapping degree increases as the current depth of the target object increases; or/and
when the current depth is invariant, the current overlapping degree decreases as the preset distance increases.

12. The image-capturing device as claimed in claim 9, wherein the processor is further configured for:
triggering a prompt message for increasing the current depth of the target object, in response to the current overlapping degree being less than a minimum value of the preset range; and/or
triggering a prompt message for decreasing the current depth of the target object, in response to the current overlapping degree being greater than a maximum value of the preset range.

13. One or more non-transitory computer-readable storage medium containing computer-executable instructions, when executed by one or more processor, causing the one or more processor to perform:
obtaining a depth image of a current scene;
obtaining a visible-light image of the current scene;
obtaining a current depth of a target object in a target scene according to the depth image and the visible-light image;
obtaining a current overlapping degree of an overlapping region between a field-of-view (FOV) region of the depth image at the current depth and a FOV region of the visible-light image at the current depth, to the FOV region of the visible-light image at the current depth;
determining whether the current overlapping degree is within a preset range; and
triggering a prompt message for adjusting the current depth of the target object, in response to the current overlapping degree not being within the preset range.

14. The non-transitory computer-readable storage medium as claimed in claim 13, wherein the non-transitory computer-readable storage medium is applied in an image-capturing device comprising a visible-light camera and an infrared-light camera; and
when the computer-executable instructions executed by the one or more processor, causing the one or more processor to further perform:
obtaining the overlapping region and a non-overlapping region between the FOV region of the depth image at the current depth and the FOV region of the visible-light image at the current depth according to the current depth, a FOV of the visible-light camera, a FOV of the infrared-light camera, and a preset distance between the visible-light camera and the infrared-light camera; and
calculating the ratio of the overlapping region to the FOV region of the visible-light image, to obtain the current overlapping degree.

15. The non-transitory computer-readable storage medium as claimed in claim 14, wherein when the preset distance is invariant, the current overlapping degree increases as the current depth of the target object increases; or/and
when the current depth is invariant, the current overlapping degree decreases as the preset distance increases.

16. The non-transitory computer-readable storage medium as claimed in claim 13, wherein when the computer-executable instructions executed by one or more processor, causing the one or more processor to further perform:
triggering a prompt message for increasing the current depth of the target object, in response to the current overlapping degree being less than a minimum value of the preset range; and/or
triggering a prompt message for decreasing the current depth of the target object, in response to the current overlapping degree being greater than a maximum value of the preset range.

17. A computing device comprising a processor and a memory storing computer-executable instructions, when executed by the processor, causing the processor to perform:
obtaining a depth image of a current scene;
obtaining a visible-light image of the current scene;
obtaining a current depth of a target object in a target scene according to the depth image and the visible-light image;
obtaining a current overlapping degree of an overlapping region between a field-of-view (FOV) region of the depth image at the current depth and a FOV region of the visible-light image at the current depth, to the FOV region of the visible-light image at the current depth;
determining whether the current overlapping degree is within a preset range; and
triggering a prompt message for adjusting the current depth of the target object, in response to the current overlapping degree not being within the preset range.

18. The computing device as claimed in claim 17, wherein the computing device comprises a visible-light camera and an infrared-light camera; and
when the computer-executable instructions executed by the processor, causing the processor to further perform:
obtaining the overlapping region and a non-overlapping region between the FOV region of the depth image at the current depth and the FOV region of the visible-light image at the current depth according to the current depth, a FOV of the visible-light camera, a FOV of the infrared-light camera, and a preset distance between the visible-light camera and the infrared-light camera; and
calculating the ratio of the overlapping region to the FOV region of the visible-light image, to obtain the current overlapping degree.

19. The computing device as claimed in claim 18, wherein when the preset distance is invariant, the current overlapping degree increases as the depth of the target object increases; or/and
when the current depth is invariant, the current overlapping degree decreases as the preset distance increases.

20. The computing device as claimed in claim 17, when the computer-executable instructions executed by the processor, causing the processor to further perform:
triggering a prompt message for increasing the current depth of the target object, in response to the current overlapping degree being less than a minimum value of the preset range; and/or
triggering a prompt message for decreasing the current depth of the target object, in response to the current overlapping degree being greater than a maximum value of the preset range.
